# EUROPEAN PATENT APPLICATION

(11) **EP 3 284 568 A1**
(43) Date of publication of application: **21.02.2018**
(21) Application number: 16780114.1
(22) Date of filing: 14.04.2016
(51) Int. Cl.: B29C 39/02, B29C 33/40, B29C 39/42, G09B 23/28

(54) **METHOD FOR PRODUCING THREE-DIMENSIONAL OBJECT**

(30) Priority: 17.04.2015 JP 2015085488
(71) Applicant: JSR Corporation, Minato-ku Tokyo 105-8640 (JP)
(72) Inventor: HAYASHIDA, Taizo, Tokyo 105-8640 (JP); ABE, Shigeru, Tokyo 105-8640 (JP)
(74) Representative: TBK
(86) International application number: PCT/JP2016/062028
(87) International publication number: WO 2016/167323

(57) **Abstract**

The purpose of the present invention is to provide a method for producing a three-dimensional (3D) object in order to obtain a 3D object having excellent moldability and mechanical characteristics.

Provided is a method for producing a 3D object, the method comprising: a molding step of irradiating a composition for molding a 3D object filled in the cavity of a mold with electromagnetic waves having a wavelength of from 0.01 m to 100 m, and molding the composition for molding a 3D object into a 3D object, wherein the composition comprising a solvent and at least one selected from a polymer and a polymerizable monomer.

## Description

### Technical Field

The present invention relates to a method for producing a three-dimensional (3D) object.

### Background Art

Regarding a method for obtaining an object having a three-dimensional shape, for example, a cast molding method of generally using a thermosetting or photocurable resin, a lamination molding method of using a thermoplastic resin or a photocurable resin, and an injection molding method of using a thermoplastic resin have been conventionally known. Furthermore, when a flexible 3D object is molded, cast molding using a polyurethane elastomer or a silicone elastomer, which are both thermosetting and soft, is employed in many cases.

It is also conventionally known that biological models that are used for the education and training of medical students, and the exercise carried out by doctors are produced using soft elastomers such as silicone elastomers and polyurethane elastomers (Patent Document 1). Furthermore, in recent years, attempts have been made to enhance the accuracy and safety of surgical operations, after medical simulations are conducted using biological models that faithfully reproduce the condition of affected areas in individual patients before performing operations.

### Citation List

### Patent Document

Patent Document 1: JP 2006-113440 A

### Summary of the Invention

### Problems to be Solved by the Invention

However, in conventional methods for producing a 3D object, molding of a 3D object having excellent moldability, flexibility and mechanical strength has been achieved unsatisfactorily, due to the characteristics of the resin materials used therein.

The present invention was achieved in view of the problems of the prior art technologies such as described above, and an object of the invention is to provide a method for producing a 3D object in order to obtain a 3D object having excellent moldability and mechanical characteristics.

### Means for Solving the Problem

The inventors of the present invention conducted thorough investigations so that they can develop such a method for producing a 3D object. As a result, the inventors found that, as a method for producing a 3D object, when a composition for molding a 3D object is irradiated with electromagnetic waves having a wavelength of from 0.01 m to 100 m while the composition is held in the cavity of a mold to fill up the cavity, and the composition for molding a 3D object is molded into a 3D object, a 3D object having excellent moldability, flexibility and mechanical strength is obtained. Thus, the inventors completed the present invention.

Specifically, the following method for producing a 3D object is provided by the present invention.
[1] A method for producing a 3D object, the method comprising:
   a molding step comnprising
      - irradiating a composition for molding a 3D object filled in the cavity of a mold with electromagnetic waves having a wavelength of from 0.01 m to 100 m, and
      - molding the composition for molding a 3D object into a 3D object,
   wherein the composition comprises a solvent and at least one selected from a polymer and a polymerizable monomer.
[2] A method for producing a 3D object, the method comprising:
   a molding step comprising
      - irradiating a composition for molding a 3D object filled in the cavity of a mold with electromagnetic waves having a wavelength of from 0.01 m to 100 m, and
      - molding the composition for molding a 3D object into a 3D object
   wherein the composition including at least one selected from a polymer having a polymerizable functional group and a polymerizable monomer.
[3] The method for producing a 3D object according to [1] or [2], further comprising a filling step of filling the cavity of the mold with the composition for molding a 3D object before the molding step.
[4] The method for producing a 3D object according to any one of [1] to [3], wherein in the molding step, irradiation of the composition with electromagnetic waves is performed through the mold.
[5] The method for producing a 3D object according to any one of [1] to [4], wherein the mold is made of rubber or a thermoplastic resin.
[6] The method for producing a 3D object according to any one of [1] to [5], wherein the wavelength of the electromagnetic waves is from 0.1 m to 10 m.
[7] The method for producing a 3D object according to any one of [1] to [6], wherein the composition for molding a 3D object comprises at least one selected from a thermal radical generator, a thermal acid generator, and a crosslinking accelerator.
[8] The method for producing a 3D object according to any one of [1] to [7], wherein the composition for molding a 3D object comprises a polymer.
[9] The method for producing a 3D object according to any one of [1] to [8], wherein the composition for molding a 3D object comprises a polymerizable monomer.
[10] The method for producing a 3D object according to [9], wherein the composition for molding a 3D object comprises at least one selected from a radical polymerizable unsaturated compound and a cationic polymerizable compound as polymerizable monomers.
[11] The method for producing a 3D object according to any one of [1] and [3] to [10], wherein the content of the solvent in the composition for molding a 3D object is from 20% by mass to 80% by mass with respect to 100% by mass of the composition for molding a 3D object.
[12] The method for producing a 3D object according to any one of [1] to [11], wherein the solvent is at least one selected from a polar solvent and an ionic liquid.
[13] The method for producing a 3D object according to [12], wherein the polar solvent is at least one selected from water, an alcohol, an alkyl ether of a polyhydric alcohol, and an aprotic polar solvent. Advantageous Effects of Invention

According to the present invention, a method for producing a 3D object in order to obtain a 3D object having excellent moldability and mechanical characteristics can be provided.

### Brief Description of Drawings

Fig. 1 is an explanatory diagram illustrating an example of a 3D object molding apparatus used for the method for producing a 3D object of the present invention.
Fig. 2 is an explanatory diagram illustrating an example of a 3D object molding apparatus used for the method for producing a 3D object of the present invention.

### Reference List

- 1: 3D object molding apparatus
- 2: Mold
- 21: Cavity
- 22: Receiving unit for composition for molding 3D object
- 23: Injection gate
- 3: Composition for molding 3D object
- 3: 3D object
- 4: Electromagnetic wave generating unit

### Detailed Description of the Invention

Hereinafter, embodiments of the present invention will be explained; however, the present invention is not intended to be limited to the following embodiments. That is, it is obvious that, for example, appropriate modifications and improvements made for the following embodiments should be construed to be included in the scope of the present invention to the extent that the purport of the present invention is maintained, based on the conventional knowledge of those ordinarily skilled in the art.

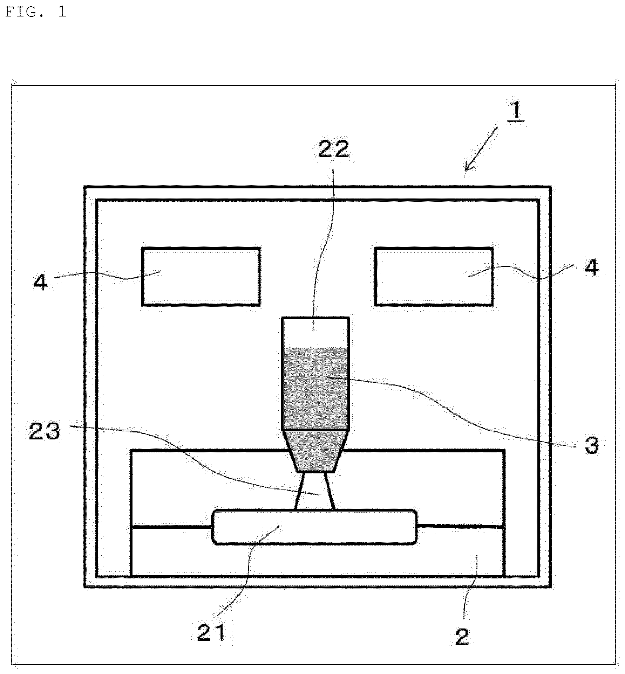

The method for producing a 3D object of the present invention comprises, for example, as illustrated in Fig. 1, (B) a molding step of irradiating a composition for molding a 3D object 3 filled in a cavity 21 with electromagnetic waves having a wavelength of from 0.01 m to 100 m, and molding the composition for molding a 3D object 3 into a three-dimensional composition. The method may comprise, before the (B) molding step, (A) a filling step of filling the cavity 21 of a mold 2 with the composition for molding a 3D object 3. The (B) molding step is a method by which the composition for molding a 3D object 3 can be selectively heated in a mold 2 on the occasion of molding a 3D object.

The composition for molding a 3D object 3 may be either a composition for molding a 3D object 31, which comprises at least one selected from a polymer and a polymerizable monomer and a solvent; or a composition for molding a 3D object 32, which comprises at least one selected from a polymer having a polymerizable functional group and a polymerizable monomer.

In regard to the present example, as illustrated in Fig. 1, a 3D object molding apparatus 1 having a mold 2 that forms the cavity 21; and an electromagnetic wave generating unit 4 that radiates the microwaves or radiofrequency waves, can be used.

### <(A) Filling step>

First, a filling step will be explained. The filling step is a step of filling the cavity 21 of a mold 2 with the composition for molding a 3D object 3. The composition for molding a 3D object 3 may be any of a composition for molding a 3D object 31, the composition comprising at least one selected from a polymer and a polymerizable monomer, and a solvent; or a composition for molding a 3D object 32, the composition comprising at least one selected from a polymer having a polymerizable functional group, and a polymerizable monomer.

In regard to the filling step, it is preferable that the dielectric power factor (tan δ) of the composition for molding a 3D object 3 is greater than the dielectric power factor (tan δ) of the mold.

In this case, on the occasion in which the mold 2 and the composition for molding a 3D object 3 are subjected to dielectric heating by irradiating the mold and the composition with electromagnetic waves having a wavelength of from 0.01 m and 100 m, when the dielectric power factor, which represents the dielectric loss, of the composition for molding a 3D object 3 is larger than that of the mold 2, the composition for molding a 3D object 3 can be easily heated selectively.

The dielectric power factors of the composition for molding a 3D object 3 and the dielectric power factor of the material that constitutes the mold 2 generally vary depending on, for example, temperature or the wavelength of the electromagnetic waves (microwaves or radiofrequency waves). In regard to the dielectric power factor in this case, it is implied that when the cavity 21 of the mold 2 is filled with the composition for molding a 3D object 3, for example, even in a case in which the temperature of the mold is different from the temperature of the composition for molding a 3D object 3 in a molten state, and the temperatures respectively change, a state in which the dielectric power factor of the composition for molding a 3D object 3 is larger than the dielectric power factor of the mold 2 throughout the course of temperature changes, is attained.

### [Mold]

It is preferable that the mold 2 is made of rubber or a thermoplastic resin. In the case of a mold made of rubber, there are no particular limitations; however, a mold made of a silicone rubber is more preferred. Furthermore, the hardness of the silicone rubber is preferably 25 to 80 as measured according to the JIS-A standards. Furthermore, in the case of a mold made of a thermoplastic resin, there are no particular limitations; however, for example, a styrene-based resin such as a styrene-acrylonitrile copolymer, a styrene-maleic anhydride copolymer, or a styrene-methyl methacrylate copolymer; a rubber-modified thermoplastic resin such as an ABS resin (acrylonitrile-butadiene-styrene resin), an AES resin (acrylonitrile-ethylenepropylenediene-styrene resin), or an ASA resin (acrylate-styrene-acrylonitrile resin); polymethyl methacrylate, a polycarbonate resin (PC), a PC/rubber-modified thermoplastic resin alloy, or a PLA resin (polylactic acid resin) can be used. In this case, production of the mold is easier, and the composition for molding a 3D object 3 can be selectively heated without almost heating the mold 2, by means of the above-mentioned electromagnetic waves.

Next, the composition for molding a 3D object 3 will be explained. The composition for molding a 3D object 3 used in the present invention comprises at least one selected from a polymer and a polymerizable monomer, and a solvent, or comprises at least one selected from a polymer having a polymerizable functional group, and a polymerizable monomer.

### [Polymer]

The polymer is not particularly limited; however, examples include a vinyl alcohol-based polymer, an acrylic polymer, a vinylidene fluoride-based polymer, an acrylonitrile-based polymer, and a polysaccharide.

Examples of the polysaccharide include cellulose derivatives such as methyl cellulose, ethyl cellulose, acetyl cellulose, cellulose acetate, cellulose triacetate, an alkyl cellulose, and an acidic cellulose having a carboxyl group in a side chain; hyaluronic acid, agarose, dextran, pullulan, inulin, and chitosan.

Among the polymers described above, the polymer is particularly preferably polyvinyl alcohol or a polysaccharide, from the viewpoint of having high strength with respect to the percentage content of solvent.

Furthermore, among the polymers described above, in a case in which the polymer is polymerized with a polymerizable monomer that will be described below and is crosslinked, it is preferable to use a polymer having a polymerizable functional group or a polymer having a crosslinkable group. The polymer having a polymerizable functional group is not particularly limited, and examples include a polymer having a radical polymerizable functional group, and a polymer having a cationic polymerizable functional group. The polymer having a crosslinkable group is not particularly limited, and an example may be a polymer having a group that reacts with the same group or a different group of another molecule by means of heat and is thereby bonded to the other molecule.

Here, examples of the radical polymerizable functional group include a (meth)acryloyl group, a vinyl group, an allyl group, and a vinyl ether group; however, an acryloyl group is preferable from the viewpoint of the rate of the photoinitiated polymerization reaction.

Examples of the cationic polymerizable functional group include a propenyl ether group, a vinyl ether group, an alicyclic epoxy group, a glycidyl group, a vinyl group, and a vinylidene group. A propenyl ether group, a vinyl ether group, an alicyclic epoxy group, and a glycidyl group are preferred.

Examples of the crosslinkable group include a hydroxyl group, a carboxyl group, an amino group, an amide group, and a mercapto group.

An example of the polymer having a radical polymerizable functional group may be a polymer obtainable by modifying a polymer having an isocyanate group and a reactive functional group introduced thereinto, with a (meth)acrylic acid derivative or a vinyl derivative, both derivatives having an isocyanate group.

The polymer that is reactive with an isocyanate group is preferably a polymer into which a functional group that is reactive with an isocyanate group has been introduced. Examples of such a functional group include a hydroxyl group, a carboxyl group, an amino group, an amide group, and a mercapto group. That is, examples of the first polymer include a polymer having hydroxyl groups, a polymer having carboxyl groups, a polymer having amino groups, a polymer having amide groups, and a polymer having mercapto groups.

Examples of the polymer having a hydroxyl group include cellulose derivatives such as methyl cellulose, ethyl cellulose, acetyl cellulose, cellulose acetate, and cellulose triacetate; acidic cellulose derivatives having carboxyl groups in side chains; polyvinyl alcohol, dextran, an alkyl cellulose, agarose, pullulan, inulin, chitosan, poly-2-hydroxypropyl (meth)acrylate, and poly-2-hydroxyethyl (meth)acrylate.

Examples of the polymer having carboxyl groups include a (meth) acrylic acid ester, and a copolymer containing (meth) acrylic acid as a copolymerized component.

Examples of the polymer having amino groups include polyallylamine, polyethylenimine, poly-3-aminopropyl (meth)acrylate, poly-3-aminopropyl (meth)acrylamide, chitosan, a diallylamine acetate-sulfur dioxide copolymer, and an acrylamide-diallyldimethylammonium chloride copolymer.

Examples of the polymer having amide groups include polyvinylpyrrolidone, polyvinylcaprolactam, a polyvinylpyrrolidone/vinyl acetate copolymer, a vinylpyrrolidone/vinylcaprolactam copolymer, a vinylpyrrolidone/vinylimidazole copolymer, a vinylpyrrolidone/acrylic acid copolymer, a vinylpyrrolidone/methacrylic acid copolymer, a vinylpyrrolidone/3-methyl-1-vinylimidazolium salt copolymer, N-vinylpyrrolidone, N-vinylpiperidone, N-vinylcaprolactam, a protein, a polypeptide, and an oligopeptide.

Examples of the polymer having mercapto groups include a polysulfide having thiol groups at the chain ends.

Examples of the (meth) acrylic acid derivative or vinyl derivative, both derivatives having an isocyanate group, include 2-methacryloyloxyethyl isocyanate, 2-acryloyloxyethyl isocyanate, and 2-(2-methacryloyloxyethyloxy)ethyl isocyanate. Meanwhile, the (meth) acrylic acid derivative or vinyl derivative having an isocyanate group also include derivatives having a blocked isocyanate group, and for example, 1,1-(bisacryloyloxymethyl)ethyl isocyanate, 2-(0-[1'-methylpropylideneamino]carboxyamino)ethyl methacrylate, or 2-[3,5-dimethylpyrazolyl]carbonylamino]ethyl methacrylate can be used.

Furthermore, an example of the polymer having a cationic polymerizable functional group may be a polymer having a structural unit derived from an epoxy group-containing vinyl monomer having a polymerizable vinyl group (group having an ethylenically unsaturated bond) and one or more epoxy groups in one molecule.

Examples of the epoxy group-containing vinyl monomer include non-hydroxyl group-containing (meth)acrylic acid esters such as glycidyl (meth)acrylate, 4-hydroxybutyl (meth) acrylate glycidyl ether, 3,4-epoxycyclohexylmethyl (meth)acrylate, and α-(meth)acryl-ω-glycidyl polyethylene glycol; hydroxyl group-containing (meth)acrylic acid esters such as glycerin mono(meth)acrylate glycidyl ether; aromatic monovinyl compounds such as vinylbenzyl glycidyl ether; allyl glycidyl ether, 3,4-epoxy-1-butene, and 3,4-epoxy-3-methyl-1-butene. Among these, one kind of compound may be used alone, or two or more kinds of compounds may be used in combination . Among these, the epoxy group-containing monovinyl monomer is preferably an epoxy group-containing (meth)acrylic acid ester or an epoxy group-containing aromatic monovinyl compound; more preferably an epoxy group-containing (meth)acrylic acid ester; even more preferably glycidyl (meth)acrylate or 4-hydroxybutyl (meth)acrylate glycidyl ether; and particularly preferably glycidyl (meth)acrylate.

The polymer having a structural unit derived from an epoxy group-containing vinyl monomer may also be a copolymer containing a structural unit derived from a monomer other than an epoxy group-containing vinyl monomer. Examples of the monomer other than an epoxy group-containing vinyl monomer include (meth)acrylic acid esters such as methyl (meth)acrylate, ethyl (meth)acrylate, butyl (meth)acrylate, cyclohexyl (meth)acrylate, and methoxyethyl (meth)acrylate; and (meth)acrylamides such as (meth)acrylamide, dimethyl (meth)acrylamide, (meth)acryloylmorpholine, and diacetone (meth)acrylamide. One kind of compound may be used alone, or two or more kinds of compounds may be used in combination.

Regarding the polymer having a crosslinkable group, the polymers mentioned above as examples of the polymer having hydroxyl groups, the polymer having carboxyl groups, the polymer having amino groups, the polymer having amide groups, and the polymer having mercapto groups, can be used.

Regarding the polymer, the weight average molecular weight (Mw) measured by gel permeation chromatography (GPC) and calculated relative to polystyrene standards is preferably from 5,000 to 200,000, and more preferably from 10,000 to 100,000. If the weight average molecular weight is lower than the range described above, the 3D object obtainable by molding may not acquire high strength. If the weight average molecular weight is higher than the range described above, there may be difficulties in molding due to an increase in viscosity.

### [Polymerizable monomer]

Next, the polymerizable monomer will be explained. The polymerizable monomer is not particularly limited, and examples include a radical polymerizable unsaturated compound and a cationic polymerizable compound.

### <Radical polymerizable unsaturated compound>

A radical polymerizable unsaturated compound means a polymerizable unsaturated compound capable of initiating polymerization by means of a radical species, and examples include a carboxyl group-containing unsaturated compound, a hydroxylgroup-containing radicalpolymerizable unsaturated compound, a reaction product of a hydroxyl group-containing radical polymerizable unsaturated compound and a lactone compound, a (meth) acrylic acid ester, a vinyl aromatic compound, a (meth) acrylamide, and an alkoxysilyl group-containing radical polymerizable unsaturated compound.

Examples of the carboxyl group-containing unsaturated compound include acrylic acid, methacrylic acid, crotonic acid, itaconic acid, maleic acid, fumaric acid, 2-carboxyethyl (meth)acrylate, 2-carboxypropyl (meth)acrylate, and 5-carboxypentyl (meth)acrylate.

Furthermore, examples of the hydroxyl group-containing radical polymerizable unsaturated compound include C2-C8 hydroxyalkyl esters of acrylic acid or methacrylic acid, such as 2-hydroxyethyl (meth)acrylate, 3-hydroxypropyl (meth)acrylate, and 4-hydroxybutyl (meth)acrylate; (poly)ethylene glycol mono(meth)acrylate, polypropylene glycol mono(meth)acrylate, polybutylene glycol mono(meth)acrylate, and a reaction product of a hydroxyl group-containing radical polymerizable unsaturated compound and a lactone compound.

Examples of the reaction product of a hydroxyl group-containing radical polymerizable unsaturated compound and a lactone compound include reaction products between the above-mentioned hydroxyl group-containing radical polymerizable unsaturated compound and lactone compounds such as β-propiolactone, dimethylpropiolactone, butyrolactone, γ-valerolactone, γ-caprolactone, γ-caprylolactone, γ-laurylolactone, ε-caprolactone, and δ-caprolactone.

Examples of the (meth)acrylic acid ester include methyl (meth)acrylate, ethyl (meth)acrylate, propyl (meth)acrylate, butyl (meth)acrylate, hexyl (meth)acrylate, 2-ethylhexyl (meth)acrylate, octyl (meth)acrylate, lauryl (meth)acrylate, cyclohexyl (meth)acrylate, and isobornyl (meth)acrylate.

Examples of the vinyl aromatic compound include styrene, α-methylstyrene, vinyltoluene, p-chlorstyrene, and vinylpyridine.

Furthermore, examples of the (meth)acrylamide include N,N-dimethylacrylamide, diethylacrylamide, N-(2-hydroxyethyl)(meth)acrylamide, N-(2-hydroxypropyl)(meth)acrylamide, N-(3-hdyroxypropyl)(meth)acrylamide, N-methyl-N-(2-hydroxyethyl)(meth)acrylamide, N-ethyl-N-(2-hydroxyethyl)(meth)acrylamide, N-methyl-N-(2-hydroxypropyl)(meth)acrylamide, N-methyl-N-(3-hydroxypropyl)(meth)acrylamide, N-ethyl-N-(2-hydroxypropyl)(meth)acrylamide, N-ethyl-N-(3-hydroxypropyl)(meth)acrylamide, N,N-di(2-hydroxyethyl)(meth)acrylamide, and N,N-di(2-hydroxypropyl)(meth)acrylamide.

Examples of the alkoxysilyl group-containing radical polymerizable unsaturated compound include vinyltrimethoxysilane, vinylmethyldimethoxysilane, vinyldimethylmethoxysilane, vinyltriethoxysilane, vinylmethyldiethoxysilane, vinyldimethylethoxysilane, vinyltripropoxysilane, vinylmethyldipropoxysilane, vinyldimethylpropoxysilane, γ-(meth)acryloyloxypropyltrimethoxysilane, γ-(meth)acryloyloxypropylmethyldimethoxysilane, and γ-(meth)acryloyloxypropyldimethylmethoxysilane.

Furthermore, examples of a compound having one radical polymerizable unsaturated bond in one molecule have been described above; however, there are no particular limitations, and a compound having two or more radical polymerizable unsaturated bonds in one molecule can also be used. Specific examples include divinylbenzene, ethylene glycol di(meth)acrylate, diethylene glycol di(meth)acrylate, triethylene glycol di(meth)acrylate, tetraethylene glycol di(meth)acrylate, 1,3-butylene glycol di(meth)acrylate, 1,4-butanediol diacrylate, glycerin di(meth)acrylate, glycerin tri(meth)acrylate, trimethylolpropane di(meth)acrylate, trimethylolpropane tri(meth)acrylate, pentaerythritol di(meth)acrylate, pentaerythritol tri(meth)acrylate, pentaerythritol tetra(meth)acrylate, dipentaerythritol penta(meth)acrylate, neopentyl glycol diacrylate, 1,6-hexanediol diacrylate, glycerol allyloxy di(meth)acrylate, 1,1,1-tris(hydroxymethyl)ethane di(meth)acrylate, and 1,1,1-tris(hydroxymethyl)ethane tri(meth)acrylate.

### <Cationic polymerizable compound>

A cationic polymerizable compound means a polymerizable compound capable of initiating polymerization by means of a cationic species, and examples include an epoxy compound, an oxetane compound, and a vinyl compound. These may be used alone, or two or more kinds of the compounds may be used in combination.

Regarding the epoxy compound, an aliphatic epoxy compound and an alicyclic epoxy compound can all be used. The aliphatic epoxy is not particularly limited and can be selected as appropriate according to the purpose. Examples include polyglycidyl ethers of an aliphatic polyhydric alcohol or an alkylene oxide adduct thereof, and specific examples include ethylene glycol diglycidyl ether, diethylene glycol diglycidyl ether, propylene glycol diglycidyl ether, tripropylene glycol diglycidyl ether, neopentyl glycol diglycidyl ether, 1,4-butanediol diglycidyl ether, 1,6-hexanediol diglycidyl ether, trimethylolpropane triglycidyl ether, trimethylolpropane diglycidyl ether, polyethylene glycol diglycidyl ether, pentaerythritol tetraglycidyl ether, bisphenol A diglycidyl ether, bisphenol AD diglycidyl ether, bisphenol S diglycidyl ether, hydrogenated bisphenol A diglycidyl ether, bisphenol F diglycidyl ether, bisphenol G diglycidyl ether, tetramethyl bisphenol A diglycidyl ether, bisphenol hexafluoroacetone diglycidyl ether, bisphenol C diglycidyl ether, dibromomethylphenyl glycidyl ether, dibromophenyl glycidyl ether, bromomethylphenyl glycidyl ether, bromophenyl glycidyl ether, dibromo-meta-cresidyl glycidyl ether, and dibromoneopentyl glycol diglycidyl ether. These may be used alone, or two or more kinds thereof may be used in combination.

Examples of a commercially available product of the aliphatic epoxy include EPOLITE 100MF (trimethylolpropane triglycidyl ether) manufactured by Kyoeisha Chemical Co., Ltd.; EX-411, EX-313, and EX-614B manufactured by Nagase ChemteX Corp.; and EPIOL E400 manufactured by NOF Corp.

Examples of the alicyclic epoxy include vinylcyclohexene monoxide, 1,2-epoxy-4-vinylcyclohexane, 1,2:8,9-diepoxylimonene, and 3,4-epoxycyclohexenylmethyl-3',4'-epoxycyclohexene carboxylate. These may be used alone, or in combination of two or more kinds thereof.

Examples of a commercially available product of the alicyclic epoxy include CEL2000, CEL3000, and CEL2021P manufactured by Daicel Corp.

An oxetane compound is a compound having a 4-membered cyclic ether, that is, an oxetane ring, in the molecule.

The oxetane compound is not particularly limited and can be selected as appropriate according to the purpose, and examples include 3-ethyl-3-hydroxymethyloxetane, 1,4-bis[{(3-ethyl-3-oxetanyl)methoxy}methyl]benzene, 3-ethyl-3-(phenoxymethyl)oxetane, bis(3-ethyl-3-oxetanylmethyl) ether, 3-ethyl-3-(2-ethylhexyloxymethyl)oxetane, 3-ethyl-[{(3-triethoxysilylpropoxy)methyl)oxetane, oxetanylsilsesquioxane, and phenol novolac oxetane. These may be used alone, or in combination of two or more kinds thereof.

The oxetanylsilsesquioxane is a silane compound having an oxetanyl group, and is a network-like polysiloxane compound having a plurality of oxetanyl groups, which is obtained by, for example, subjecting the 3-ethyl-3-[{(3-triethoxysilyl)propoxy}methyl]oxetane to hydrolysis and condensation.

The vinyl compound is not particularly limited as long as it is capable of cationic polymerization, and can be selected as appropriate according to the purpose. Examples include a styrene compound and a vinyl ether compound. Among these, a vinyl ether compound is particularly preferred from the viewpoint of the ease of performing cationic polymerization. The styrene compound means styrene, or a compound having a structure in which a hydrogen atom of the aromatic ring of styrene has been substituted by an alkyl group, an alkyloxy group, or a halogen atom. Examples of the styrene compound include p-methylstyrene, m-methylstyrene, p-methoxystyrene, m-methoxystyrene, α-methyl-p-methoxystyrene, and α-methyl-m-methoxystyrene. These may be used alone, or in combination of two or more kinds thereof.

Examples of the vinyl ether compound include methyl vinyl ether, ethyl vinyl ether, propyl vinyl ether, isopropyl vinyl ether, butyl vinyl ether, isobutyl vinyl ether, hexyl vinyl ether, cyclohexyl vinyl ether, methyl propenyl ether, ethyl propenyl ether, butyl propenyl ether, methyl butenyl ether, and ethyl butenyl ether. These may be used alone, or in combination of two or more kinds thereof.

The content of the polymerizable monomer in the composition for molding a 3D object is preferably from 1% by mass to 95% by mass, more preferably from 5% by mass to 90% by mass, even more preferably from 10% by mass to 80% by mass, and particularly preferably from 20% by mass to 70% by mass. When the content is from 1% by mass to 95% by mass, a 3D object having particularly excellent flexibility and mechanical strength can be obtained. From the viewpoint of obtaining a 3D object having particularly excellent mechanical strength, the content of the polymerizable monomer in the composition for molding a 3D object is preferably 1% by mass or more, more preferably 5% by mass or more, even more preferably 10% by mass or more, and particularly preferably 20% by mass or more. Furthermore, from the viewpoint of obtaining a 3D obj ect having particularly excellent flexibility, the content of the polymerizable monomer in the composition for molding a 3D object is preferably 95% by mass or less, more preferably 90% by mass or less, even more preferably 80% by mass or less, and particularly preferably 70% by mass or less.

The content of the polymerizable monomer is preferably from 10 parts by mass to 10,000 parts by mass, more preferably from 20 parts by mass to 5,000 parts by mass, even more preferably from 50 parts by mass to 3,000 parts by mass, and particularly preferably from 100 parts by mass to 2,000 parts by mass, with respect to 100 parts by mass of the polymer. When the content is from 10 parts by mass to 10,000 parts by mass, a 3D object having particularly excellent flexibility and mechanical strength can be obtained. Furthermore, from the viewpoint of obtaining a 3D object having particularly excellent mechanical strength, the content of the polymerizable monomer is preferably 10 parts by mass or more, more preferably 20 parts by mass or more, even more preferably 50 parts by mass or more, and particularly preferably 100 parts by mass or more, with respect to 100 parts by mass of the polymer . Furthermore, from the viewpoint of obtaining a 3D object having particularly excellent flexibility, the content of the polymerizable monomer is preferably 10,000 parts by mass or less, more preferably 5,000 parts by mass or less, even more preferably 3,000 parts by mass or less, and particularly preferably 2,000 parts by mass or less, with respect to 100 parts by mass of the polymer.

### [Solvent]

The composition for molding a 3D object used in the present invention may comprise a solvent. From the viewpoint of obtaining a 3D object having particularly excellent flexibility and mechanical strength, it is preferable that the composition comprises a solvent.

Examples of the solvent include alcohols such as methanol, ethanol, 1-propanol, 2-propanol, 1-butanol, 2-butanol, ethylene glycol, diethylene glycol, and propylene glycol; cyclic ethers such as tetrahydrofuran and dioxane; alkyl ethers of polyhydric alcohols, such as ethylene glycol monomethyl ether, ethylene glycol monoethyl ether, ethylene glycol dimethyl ether, ethylene glycol diethyl ether, diethylene glycol monomethyl ether, diethylene glycol monoethyl ether, diethylene glycol dimethyl ether, diethylene glycol diethyl ether, diethylene glycol ethyl methyl ether, propylene glycol monomethyl ether, and propylene glycol monoethyl ether; alkyl ether acetates of polyhydric alcohols, such as ethylene glycol ethyl ether acetate, diethylene glycol ethyl ether acetate, propylene glycol ethyl ether acetate, and propylene glycol monomethyl ether acetate; aromatic hydrocarbons such as toluene and xylene; ketones such as acetone, methyl ethyl ketone, methyl isobutyl ketone, cyclohexanone, 4-hydroxy-4-methyl-2-pentanone, and diacetone alcohol; esters such as ethyl acetate, butyl acetate, ethyl 2-hydroxypropionate, ethyl 2-hydroxy-2-methylpropionate, ethyl 2-hydroxy-2-methylpropionate, ethyl ethoxyacetate, ethyl hydroxyacetate, methyl 2-hydroxy-3-methylbutanoate, methyl 3-methoxypropionate, ethyl 3-methoxypropionate, ethyl 3-ethoxypropionate, methyl3-ethoxypropionate, ethyl acetate, and butyl acetate; aprotic polar solvents such as dimethyl sulfoxide, diethyl sulfoxide, acetonitrile, N-methyl-2-pyrrolidone, γ-butyrolactone, N,N-dimethylformamide, N,N-dimethylacetamide (DMAc), 1,3-dimethyl-2-imidazolidinone, sulfolane, dimethylsulfone, diethylsulfone, diisopropylsulfone, diphenylsulfone, diphenyl ether, benzophenone, a dialkoxybenzene (alkoxy group having 1 to 4 carbon atoms), and a trialkoxybenzene (alkoxy group having 1 to 4 carbon atoms) ; water; and an ionic liquid.

Regarding the ionic liquid, an ionic liquid composed of a cation component and an anion component and having a melting point of 200°C or lower is preferred, an ionic liquid having a melting point of 100°C or lower is more preferred, and an ionic liquid having a melting point of 50°C or lower is even more preferred. The lower limit of the melting point is not limited; however, the lower limit is preferably -100°C or higher, and more preferably -30°C or higher.

Specific examples of the cation component include N-methylimidazolium cation, N-ethylimidazolium cation, 1,3-dimethylimidazolium cation, 1,3-diethylimidazolium cation, 1-ethyl-3-methylimidazolium cation, 1-propyl-3-methylimidazolium cation, 1-butyl-3-methylimidazolium cation, 1-hexyl-3-methylimidazolium cation, 1,2,3-trimethylimidazolium cation, 1,2,3,4-tetramethylimidazolium cation, 1-allyl-3-methylimidazolium cation, N-propylpyridinium cation, N-butylpyridinium cation, 1,4-dimethylpyridinium cation, 1-butyl-4-methylpyridinium cation, 1-butyl-2,4-dimethylpyridinium cation, trimethylammonium cation, ethyldimethylammonium cation, diethylmethylammonium cation, triethylammonium cation, tetramethylammonium cation, triethylmethylammonium cation, and tetraethylammonium cation.

Examples of the anion component include a halide ion (for example, Cl⁻, Br⁻, or I⁻), a carboxylate anion (for example, C₂H₅CO₂⁻, CH₃CO₂⁻, or HCO₂⁻, each having 1 to 3 carbon atoms in total), a psuedohalide ion (for example, CN⁻, SCN⁻, OCN⁻, ONC⁻, or N₃⁻, all being monovalent and having characteristics similar to those of halides), a sulfonate anion, an organic sulfonate anion (for example, methanesulfonate anion), a phosphate anion (for example, ethyl phosphate anion, methyl phosphate anion, or hexafluorophosphate anion), borate anion (for example, tetrafluoroborate), and perchlorate anion. A halide ion and a carboxylate anion are preferred.

Regarding the solvent contained in the composition for molding a 3D object that is used in the present invention, among the compounds mentioned above, from the viewpoint of moldability of a 3D object and handling, alcohols, alkyl ethers of polyhydric alcohols, alkyl ether acetates of polyhydric alcohols, ketones, esters, polar solvents such as water, and ionic liquids are preferred, and water, alcohols, alkyl ethers of polyhydric alcohols, and aprotic polar solvents are more preferred.

The content of the solvent is preferably from 1% by mass to 99% by mass, more preferably from 5% by mass to 95% by mass, even more preferably from 10% by mass to 90% by mass, and particularly preferably from 20% by mass to 80% by mass, with respect to 100% by mass of the composition for molding a 3D object. When the content is from 1% by mass to 99% by mass, a 3D object having particularly excellent flexibility and mechanical strength can be obtained. Furthermore, from the viewpoint of obtaining a 3D object having excellent flexibility, the content of the solvent is preferably 1% by mass or more, more preferably 5% by mass or more, even more preferably 10% by mass or more, and particularly preferably 20% by mass or more, with respect to 100% by mass of the composition for molding a 3D object. Furthermore, from the viewpoint of obtaining a 3D object having particularly excellent mechanical strength, the content of the solvent is preferably 99% by mass or less, more preferably 95% by mass or less, even more preferably 90% by mass or less, and particularly preferably 80% by mass or less, with respect to 100% by mass of the composition for molding a 3D object.

Furthermore, the content of the solvent is preferably from 1 part by mass to 10,000 parts by mass, more preferably from 5 parts by mass to 5,000 parts by mass, even more preferably from 10 parts by mass to 1,000 parts by mass, and particularly preferably from 20 parts by mass to 400 parts by mass, with respect to 100 parts by mass of the total mass of polymers and polymerizable monomers. When the content is from 1 part by mass to 10,000 parts by mass, a 3D object having particularly excellent flexibility and mechanical strength can be obtained. Furthermore, from the viewpoint of obtaining a 3D object having excellent flexibility, the content of the solvent is preferably 1 part by mass or more, more preferably 5 parts by mass or more, even more preferably 10 parts by mass or more, and particularly preferably 20 parts by mass or more, with respect to 100 parts by mass of the total mass of polymers and polymerizable monomers. Furthermore, from the viewpoint of obtaining a 3D object having particularly excellent mechanical strength, the content of the solvent is preferably 10,000 parts by mass or less, more preferably 5,000 parts by mass or less, even more preferably 1,000 parts by mass or less, and particularly preferably 400 parts by mass or less, with respect to 100 parts by mass of the total mass of polymers and polymerizable monomers.

### [Thermal radical generator, thermal acid generator, and crosslinking accelerator]

In regard to the composition for molding a 3D object that is used in the present invention, in a case in which the composition comprises a polymerizable monomer such as a radical polymerizable unsaturated compound or a cationic polymerizable compound, it is desirable from the viewpoint of obtaining a 3D object having excellent strength that the composition comprises at least one or more selected from a thermal radical generator, a thermal acid generator, and a crosslinking accelerator. By using a thermal radical generator, a thermal acid generator, or a crosslinking accelerator, when the composition for molding a 3D object is irradiated with electromagnetic waves in the molding step that will be described below, the composition is heated, and the polymerizable monomer is polymerized.

As the thermal radical generator, various compounds can be used; however, a peroxide or an azo compound, both of which can generate a radical under the conditions of the polymerization temperature, is preferred. This peroxide is not limited; however, examples include diacyl peroxides such as benzoyl peroxide and lauroyl peroxide; dialkyl peroxides such as dicumyl peroxide and di-t-butyl peroxide; peroxycarbonates such as diisopropyl peroxydicarbonate and bis(4-t-butylcyclohexyl) peroxydicarbonate; alkyl peresters such as t-butyl peroxyoctoate and t-butyl peroxybenzoate; and inorganic peroxides such as potassium persulfate and ammonium persulfate. Particularly, potassium persulfate and benzoyl peroxide are preferred. Examples of the azo compound include 2,2'-azobisisobutyronitrile, 2,2'-azobis-(2,4-dimethylvaleronitrile), 2,2'-azobis-(4-methoxy-2,4-dimethylvaleronitrile), and dimethyl azobisisobutyrate, and dimethyl azobisisobutyrate is particularly preferred.

The thermal acid generator is not particularly limited; however, examples include an ionic compound and a nonionic compound.

Examples of the ionic thermal acid generator include triphenylsulfonium, 1-dimethylthionaphthalene, 1-dimethylthio-4-hydroxynaphthalene, 1-dimethylthio-4,7-dihydroxynaphthalene, 4-hydroxyphenyldimethylsulfonium, benzyl-4-hydroxyphenylmethylsulfonium, 2-methylbenzyl-4-hydroxyphenylmethylsulfonium, 2-methylbenzyl-4-acetylphenylmethylsulfonium, 2-methylbenzyl-4-benzoyloxyphenylmethylsulfonium, and methanesulfonates, trifluoromethanesulfonates, camphor-sulfonates, p-toluenesulfonates, and hexafluorophosphonates of the above-mentioned sulfoniums.

Examples of the nonionic thermal acid generator include a halogen-containing compound, a diazomethane compound, a sulfone compound, a sulfonic acid ester compound, a carboxylic acid ester compound, a phosphoric acid ester compound, a sulfonimide compound, and a sulfonebenzotriazole compound. Among these, a sulfonimide compound is particularly preferred. Specific examples include N-(trifluoromethylsulfonyloxy)succinimide, N-(camphorsulfonyloxy)succinimide, N-(4-methylphenylsulfonyloxy)succinimide, N-(2-trifluoromethylphenylsulfonyloxy)succinimide, N-(4-fluorophenylsulfonyloxy)succinimide, N-(trifluoromethylsulfonyloxy)phthalimide, N-(camphorsulfonyloxy)phthalimide, N-(2-trifluoromethylphenylsulfonyloxy)phthalimide, N-(2-fluorophenylsulfonyloxy)phthalimide, N-(trifluoromethylsulfonyloxy)diphenylmaleimide, and tetrahydrothiophenium salts such as 1-(4-n-butoxynaphthalen-1-yl)tetrahydrothiophenium trifluoromethanesulfonate and 1-(4,7-dibutoxy-1-naphthalenyl)tetrahydrothiophenium fluoromethanesulfonate.

As the crosslinking accelerator, various compounds can be used; however, a basic compound is suitably used. Specific examples of the basic compound include alkali metal hydroxides such as lithiumhydroxide, sodium hydroxide, and potassium hydroxide; alkaline earth metal hydroxides such as magnesium hydroxide and calcium hydroxide; alkali metal alkoxides such as sodium methoxide, sodium ethoxide, potassium methoxide, potassium ethoxide, and potassium tert-butoxide; alkaline earth metal alkoxides such as magnesium methoxide andmagnesiumethoxide; and amine-based compounds such as triethylamine, ethanolamine, pyridine, piperidine, and morpholine.

The content of the thermal radical generator is not particularly limited; however, usually, the content is usually from 0.01% by mass to 10% by weight, and preferably from 0.05% by mass to 5% by mass, with respect to the total mass of polymers and polymerizable monomers. The content of the thermal acid generator is not particularly limited; however, usually, the content is usually from 0.01% by mass to 10% by mass, and preferably from 0.05% by mass to 5% by mass, with respect to the total mass of polymers and polymerizable monomers.

The content of the crosslinking accelerator is not particularly limited; however, usually, the content is usually from 0.01% by mass to 10% by mass, and preferably from 0.05% by mass to 5% by mass, with respect to the total mass of polymers and polymerizable monomers.

### [Crosslinking agent]

Regarding the composition for molding at 3D object used in the present invention, in a case in which the composition comprises a polymer having a crosslinkable group, it is desirable that the composition comprises a crosslinking agent from the viewpoint of obtaining a 3D object having excellent strength.

Regarding the crosslinking agent, polynuclear phenols or various so-called curing agents that are commercially available can be used. Examples of the polynuclear phenols include binuclear phenols such as (1,1'-biphenyl)-4,4'-diol, methylenebisphenol, and 4,4'-ethylidenebisphenol; trinuclear phenols such as 4,4',4"-methylidenetrisphenol and 4,4'-[1-[4-[1-(4-hydroxyphenyl)-1-methylethyl]phenyl]ethylidene]bi sphenol; and polyphenols such as novolac. Furthermore, examples of the curing agents include diisocyanates such as tolylene diisocyanate, diphenylmethane diisocyanate, hexamethylene diisocyanate, and cyclohexane diisocyanate; epoxy compounds such as EPIKOTE 812, EPIKOTE 815, EPIKOTE 826, EPIKOTE 828, EPIKOTE 834, EPIKOTE 836, EPIKOTE 871, EPIKOTE 1001, EPIKOTE 1004, EPIKOTE 1007, EPIKOTE 1009, and EPIKOTE 1031 (trade names, manufactured by Yuka Shell Epoxy K.K.), ARALDITE 6600, ARALDITE 6700, ARALDITE 6800, ARALDITE 502, ARALDITE 6071, ARALDITE 6084, ARALDITE 6097, and ARALDITE 6099 (trade names, manufactured by Ciba Geigy AG), DER 331, DER 332, DER 333, DER 661, DER 644, and DER 667 (trade names, manufactured by Dow Chemical Co.); melamine-based curing agents such as CYMEL 300, CYMEL 301, CYMEL 303, CYMEL 350, CYMEL 370, CYMEL 771, CYMEL 325, CYMEL 327, CYMEL 703, CYMEL 712, CYMEL 701, CYMEL 272, CYMEL 202, MYCOAT 506, and MYCOAT 508 (trade names, manufactured by Mitsui-Cyanamid, Ltd.); benzoguanamine-based curing agents such as CYMEL 1123, CYMEL 1123-10, CYMEL 1128, MYCOAT 102, MYCOAT 105, MYCOAT 106, and MYCOAT 130 (trade names, manufactured by Mitsui-Cyanamid, Ltd.); and glycoluril-based curing agents such as CYMEL 1170 and CYMEL 1172 (trade names, manufactured by Mitsui-Cyanamid, Ltd.), and NIKALACN-2702 (trade name, manufactured by Sanwa Chemical Industrial Co., Ltd.).

The content of the crosslinking agent is not particularly limited; however, usually, the content is usually from 0.01% by mass to 25% by mass, and preferably from 0.05% by mass to 15% by mass, with respect to the total mass of polymers and polymerizable monomers.

### [Other components]

In regard to the composition for molding a 3D object that is used in the present invention, for the purpose of imparting functions according to the use applications, additives such as a colorant, a filler, a plasticizer, a stabilizer, a colorant, an aging preventing agent, an oxidation preventing agent, an antistatic agent, a weather resistant agent, an ultraviolet absorber, an anti-blocking agent, a crystal nucleating agent, a flame retardant, a vulcanizing agent, a vulcanization aid, an antibacterial/antifungal agent, a dispersant, a coloration preventing agent, an antifoaming agent, and a water repellant may be incorporated into the composition to the extent that the effects of the present invention are not impaired.

In a case in which the composition for molding a 3D object of the present invention is used for a biological organ model, it is preferable that the composition is colored in a desired color using a colorant, in order to the make 3D object to approximate the biological organ model.

The content of an additive may vary depending on the type of the additive in order to impart desired function; however, from the viewpoint of maintaining productivity at the time of filling a cavity with the composition for molding a 3D object, it is desirable that the content of the additive is a content with which the composition for molding a 3D object can maintain fluidity.

The content of an additive is preferably from 0.01% by mass to 50% by mass, more preferably from 0.1% by mass to 40% by mass, and particularly preferably from 1% by mass to 30% by mass, with respect to 100% by mass of the composition for molding a 3D object. From the viewpoint of imparting a desired function to the composition for molding a 3D object, the content is particularly preferably 1% by mass or more, and from the viewpoint of maintaining fluidity and maintaining moldability of the composition for molding a 3D object, the content is particularly preferably 30% by mass or less.

### [Physical properties of composition for molding 3D object]

The viscosity of the composition for molding a 3D object is not particularly limited; however, the viscosity is preferably 1,000 Poise or less, and more preferably 100 Poise or less, under the conditions of 25°C at atmospheric pressure.

### <(B) Molding step>

The (B) molding step will be explained. The molding step is, as illustrated in Fig. 1, a step of irradiating a composition for molding a 3D object 3 held in the cavity 21 of a mold 2, with electromagnetic waves having a wavelength of from 0.01 m to 100 m, and molding the composition for molding a 3D object 3, and obtaining a 3D object.

As illustrated in Fig. 1, in the upper part of the cavity 21 in the mold 2, a receiving unit for the composition for molding a 3D object 22, which is intended for insertion and disposition of the composition for molding a 3D object 3, is formed. In the mold 2, the lower part of the receiving unit for the composition for molding a 3D object 22 of the composition for molding a 3D object 3 is connected to the upper part of the cavity 21 by means of an injection gate 23.

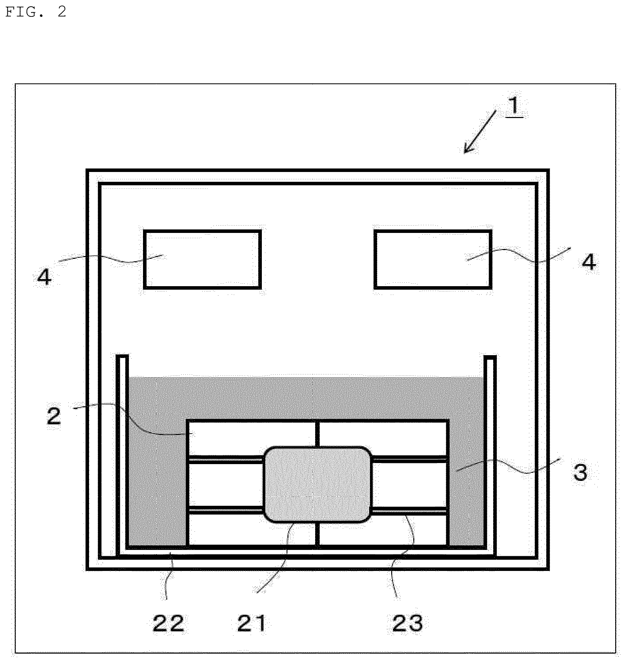

The 3D object molding apparatus is not particularly limited to the apparatus illustrated in Fig. 1, and in addition to that, for example, a 3D object molding apparatus 1 illustrated in Fig. 2 may also be used. In Fig. 2, in the 3D object molding apparatus 1, a mold 2 equipped with a cavity 21 is disposed inside a receiving unit for the composition for molding a 3D object 22. In the mold 2, the lower part of the receiving unit for the composition for molding a 3D object 22 of the composition for molding a 3D object 3 is connected to the upper part of the cavity 21 by means of an injection gate 23.

When the molding step is carried out, irradiation of the surface of the mold 2 with electromagnetic waves having a wavelength of 0.01 to 100 m (microwaves or radiofrequency waves) from the electromagnetic wave generating unit 4 is continued. Furthermore, the composition for molding a 3D object 3 inside the cavity 21 is irradiated with electromagnetic waves (microwaves or radiofrequency waves) through the mold 2.

In the molding step, regarding the electromagnetic wave generating source such as the electromagnetic wave generating unit 4, not only a single source can be used, but also a plurality of sources can be used. Furthermore, the mold can be irradiated with the electromagnetic waves not only in one direction but also in multiple directions. The wavelength of the electromagnetic waves is preferably from 0.1 m to 10 m. The output power of the electromagnetic waves is not particularly limited as long as a 3D object can be molded thereby; however, the output power is usually from 5 W to 500 W, and preferably from 10 W to 100 W. Also, the time for irradiation with electromagnetic waves is not particularly limited as long as a 3D object can be molded; however, the time for irradiation is usually from 30 seconds to 60 minutes, and preferably from 60 seconds to 30 minutes.

Subsequently, as a cooling and take-out step, the 3D object obtained by cooling the inside of the cavity 21 is cooled, the mold 2 is opened, and the resin molded product after molding is taken out from the cavity 21. At this time, since the composition for molding a 3D object 3 can be selectively heated as described above, the temperature of the mold 2 can be maintained to be lower than the temperature of the 3D object thus obtained. Therefore, the cooling time required to cool the 3D object can be shortened.

Also, since the temperature of the mold 2 can be maintained at a low temperature, deterioration of the mold 2 can be suppressed, and durability of the mold 2 can be enhanced.

Furthermore, the method for producing a 3D object of the present invention may be carried out using two or more kinds of composition to produce a laminate or a composite, from the viewpoint of increasing the mechanical strength or making the 3D object to approximate a biological organ or a biological tissue. Furthermore, a laminate or a composite may also be produced using a resin material that is different from the composition for molding a 3D object of the present invention.

### <3D object>

The 3D object thus obtainable has excellent flexibility and mechanical strength, and thus can be suitably used as, for example, a human or animal biological organ model used for medical simulations; a medical device component such as a mouthpiece or a joint fixing device; a biomaterial for an artificial joint; a cell culture sheet; a soft contact lens; a medical material such as a drug delivery system or a wound dressing material; a flexible component for the interior decoration of a room or an automobile; and various impact absorbing/damping materials.

The hardness of the 3D object is not particularly limited, and for example, the hardness (Duro-OO) may be from 0 to 100. The hardness is measured by the measurement method described in the following Examples .

The breaking strength of the 3D object is not particularly limited, and for example, the breaking strength may be from 0.01 MPa to 20.0 MPa. The breaking strength is measured by the measurement method described in the following Examples.

The breaking elongation of the 3D object is not particularly limited, and for example, the breaking elongation may be from 10% to 2,000%. The braking elongation is measured by the measurement method described in the following Examples.

The tensile modulus of the 3D object is not particularly limited, and for example, the tensile modulus may be from 0.01 N/m² to 10 N/m². The tensile modulus is measured by the measurement method described in the following Examples.

### Examples

Hereinafter, the present invention will be specifically described by way of Examples; however, the present invention is not intended to be limited to these Examples. The units "parts" and "percent (%)" in Examples and Comparative Examples are on amass basis, unless particularly stated otherwise.

### [Example 1]

4.284 g of a cellulose derivative (hydroxypropyl cellulose, HPC, viscosity at a concentration of 20 g/L in water at 25°C: 150 to 400 mPa·s) was added to 77 g of N,N-dimethylacrylamide, and the mixture was stirred until the HPC was dissolved. Next, 2- (2-methacryloyloxyethyloxy) ethyl isocyanate was added thereto in an amount equivalent to 0.3 mol relative to 1 mol of a pyranose ring, which is a constituent unit monomer of HPC, and the mixture was stirred for one hour at a temperature of 60°C. Next, 140 mL of pure water was added thereto, and 0.22 g of potassium persulfate, which is a thermal radical initiator, was further added thereto. The mixture was stirred, and thus a composition for molding a 3D object was obtained.

The composition for molding a 3D object thus obtained was poured into the cavity of a mold made of PLA (polylactic acid), which had been produced by a FFF (fused filament fabrication) type 3D printer (manufactured by Mutoh Engineering, Inc.; product No. MF-1000), and the composition was cured by irradiating the composition with electromagnetic waves (wavelength: 0.122 m) at 200 W for about 10 minutes. Thus, the composition was molded. The shape of the cavity was an approximately semispherical shape having a height (depth) of 3 cm and a diameter (inner diameter) of 5 cm. The temperature at the time of molding was 60°C. The 3D object thus obtained could be easily taken out from the cavity of the mold made of PLA (polylactic acid), and a soft object having a satisfactory shape could be obtained. The interior of the object was also uniformly cured.

Furthermore, evaluations of the 3D object thus obtained were carried out as follows.

### (Measurement of hardness)

A sample specimen of the 3D object thus molded was analyzed with a durometer (Duro 00 type) manufactured by Teclock Corp. according to the standards of ASTM D 2240. As a result, the hardness (Duro-type OO) was 20.

### (Measurement of strength)

A sample specimen of the 3D object thus molded was punched into a dumbbell shape (No. 6 size) according to the standards of JIS K625, and then a tensile strength test was performed with a material strength testing machine (EZ GRAPH) manufactured by Shimadzu Corp. As a result, the sample specimen had a breaking strength of 0.23 MPa, a breaking elongation of 300%, and a tensile modulus of 0.06 N/m².

### [Comparative Example 1]

Regarding the composition for molding a 3D object and the mold made of PLA (polylactic acid), the same composition and mold as those used in Example 1 were used. The composition for molding a 3D object was poured into a mole made of PLA (polylactic acid), and this was molded by curing the composition for 30 minutes in an oven heated to 50°C. The surface of the 3D object thus obtained became dry and hard, and the parts that were in contact with the mold dried up and adhered to the mold. Thus, the 3D object could not be taken out neatly. Furthermore, since heat was not sufficiently transferred to the interior of the 3D object, curing occurred insufficiently.

### [Examples 2 to 6]

Compositions for molding a 3D object having the compositions indicated in Table 1 were prepared in the same manner as in Example 1, and each of the compositions was poured into the cavity of a mold and was cured by irradiating the composition with electromagnetic waves (wavelength: 0.122 m) at 200 W for about 10 minutes. Thus, 3D objects were produced. The 3D objects thus obtained could be taken out easily from the cavity of the mold made of PLA (polylactic acid), and soft objects having satisfactory shapes could be obtained. Furthermore, the interior of the objects was also uniformly cured.

The hardness and strength of the 3D objects thus obtained were measured. The results are presented together in Table 1.

### [Example 7]

22 g of ethylene glycol diglycidyl ether as a polymerizable monomer was added to 200 g of water as a solvent, and the monomer was dissolved therein. Furthermore, 18 g of hyaluronic acid (weight average molecular weight: 1,500,000) was added to this mixed liquid, and the resulting mixture was left to stand overnight at 5°C. 0.1 g of sodium hydroxide was added to the solution thus obtained, and the mixture was stirred for 5 minutes . Thus, a composition for molding a 3D object was obtained.

The composition for molding a 3D object thus obtained was poured into the cavity of a mold and was cured by irradiating the composition with electromagnetic waves (wavelength: 0.122 m) at 200 W for about 10 minutes, in the same manner as in Example 1. Thus, a 3D object was produced. The 3D object thus obtained could be taken out easily from the cavity of the mold made of PLA (polylactic acid), and a soft object having a satisfactory shape could be obtained. Furthermore, the interior of the object was also uniformly cured.

### [Example 8]

A composition for molding a 3D object having the composition indicated in Table 1 was prepared in the same manner as in Example 7, and the composition was poured into the cavity of a mold and was cured by irradiating the composition with electromagnetic waves (wavelength: 0.122 m) at 200 W for about 10 minutes. Thus, a 3D object was produced. The 3D object thus obtained could be taken out easily from the cavity of the mold made of PLA (polylactic acid), and a soft object having a satisfactory shape could be obtained. Furthermore, the interior of the object was also uniformly cured.

**[Table 1]**

| | | Example 1 | Example 2 | Example 3 | Example 4 | Example 5 | Example 6 | Example 7 | Example 8 | Comparative Example 1 |
|---|---|---|---|---|---|---|---|---|---|---|
| Polymer (parts by mass) | HPC (Hydroxypropyl cellulose) | 4.284 | 4.284 | 4.284 | 4.284 | 4.284 | 4.284 | - | - | 4.284 |
| | 2-(2-Methacryloyloxyethyloxy)ethyl isocyanate | Amount equivalent to 0.3 mol relative to 1 mol of pyranose rings of HPC | Amount equivalent to 0.3 mol relative to 1 mol of pyranose rings of HPC | Amount equivalent to 0.3 mol relative to 1 mol of pyranose rings of HPC | Amount equivalent to 0.3 mol relative to 1 mol of pyranose rings of HPC | Amount equivalent to 0.3 mol relative to 1 mol of pyranose rings of HPC | Amount equivalent to 0.3 mol relative to 1 mol of pyranose rings of HPC | - | - | Amount equivalent to 0.3 mol relative to 1 mol of pyranose rings of HPC |
| | Hyaluronic acid | - | - | - | - | - | - | 18 | 18 | - |
| Polymerizable monomer (parts by mass) | N,N-dimethylacrylamide | 77 | 77 | 77 | 77 | 77 | 77 | - | - | 77 |
| | Ethylene glycol diglycidyl ether | - | - | - | - | - | - | 22 | 30 | - |
| Thermal radical generator | Potassium persulfate | 0.22 | 0.22 | 0.22 | 0.22 | 0.22 | 0.22 | - | - | 0.22 |
| Crosslinking accelerator | Sodium hydroxide | - | - | - | - | - | - | 0.1 | 0.1 | - |
| Solvent (parts by mass) | Water | 140 | 40 | 100 | 180 | 220 | - | 200 | 200 | 140 |
| | Ethanol | - | - | - | - | - | 140 | - | - | - |
| Molding method | | Microwaves | Microwaves | Microwaves | Microwaves | Microwaves | Microwaves | Microwaves | Microwaves | Heating |
| Hardness (Duro-OO) | | 20 | 63 | 37 | 16 | 12 | 18 | - | - | - |
| Breaking strength (MPa) | | 0.23 | 1.03 | 0.56 | 0.19 | 0.14 | 0.21 | - | - | - |
| Breaking elongation (%) | | 300 | 160 | 220 | 370 | 420 | 280 | - | - | - |
| Elastic modulus (m²/N) | | 0.06 | 0.45 | 0.28 | 0.04 | 0.03 | 0.06 | - | - | - |
| Remarks | | | | | | | | Curing proceeded sufficiently. | Curing proceeded sufficiently. | Curing occurred insufficiently. |

### Industrial Applicability

A 3D object obtainable by the method for producing a 3D object of the present invention has excellent flexibility and mechanical strength, and utilization of the 3D object can be expected in various fields, such as human or animal biological organ models or biological tissue models used in medical simulations; medical device components such as a mouth inhalation part and a joint fixing device; biomaterials such as artificial joints; cell culture sheets; soft contact lenses; medical materials such as drug delivery systems and wound dressing materials; soft components for the interior decoration of rooms or automobiles; and various impact absorbing/damping materials. Examples of the biological organ models include models of digestive organs such as stomach, small intestine, large intestine, liver, and pancreas; circulatory organs such as heart and blood vessels; reproductory organs such as prostate; and urinary organs such as kidney. Examples of the biological tissue models include models of biological tissues that constitute these biological organs.

## Claims

1. A method for producing a three-dimensional (3D) object, the method comprising:
a molding step of
- irradiating a composition for molding a 3D object filled in the cavity of a mold with electromagnetic waves having a wavelength of from 0.01 m to 100 m, and
- molding the composition for molding a 3D object into a 3D object,
wherein the composition comprising a solvent and at least one selected from a polymer and a polymerizable monomer.

2. A method for producing a 3D object, the method comprising:
a molding step of
- irradiating a composition for molding a 3D object filled in the cavity of a mold with electromagnetic waves having a wavelength of from 0.01 m to 100 m, and
- molding the composition for molding a 3D object into a 3D object
wherein the composition comprising at least one selected from a polymer having a polymerizable functional group and a polymerizable monomer.

3. The method for producing a 3D object according to claim 1 or 2, further comprising a filling step of filling the cavity of the mold with the composition for molding a 3D object before the molding step.

4. The method for producing a 3D object according to any one of claims 1 to 3, wherein in the molding step, irradiation of the composition with electromagnetic waves is performed through the mold.

5. The method for producing a 3D object according to any one of claims 1 to 4, wherein the mold is made of rubber or a thermoplastic resin.

6. The method for producing a 3D object according to any one of claims 1 to 5, wherein the wavelength of the electromagnetic waves is from 0.1 m to 10 m.

7. The method for producing a 3D object according to any one of claims 1 to 6, wherein the composition for molding a 3D object comprises at least one selected from a thermal radical generator, a thermal acid generator, and a crosslinking accelerator.

8. The method for producing a 3D object according to any one of claims 1 to 7, wherein the composition for molding a 3D object comprises a polymer.

9. The method for producing a 3D object according to any one of claims 1 to 8, wherein the composition for molding a 3D object comprises a polymerizable monomer.

10. The method for producing a 3D object according to claim 9, wherein the composition for molding a 3D object comprises at least one selected from a radical polymerizable unsaturated compound and a cationic polymerizable compound as polymerizable monomers.

11. The method for producing a 3D object according to any one of claims 1 and 3 to 10, wherein the content of the solvent in the composition for molding a 3D object is from 20% by mass to 80% by mass with respect to 100% by mass of the composition for molding a 3D object.

12. The method for producing a 3D object according to any one of claims 1 to 11, wherein the solvent is at least one selected from a polar solvent and an ionic liquid.

13. The method for producing a 3D object according to claim 12, wherein the polar solvent is at least one selected from water, an alcohol, an alkyl ether of a polyhydric alcohol, and an aprotic polar solvent.
